# EUROPÄISCHE PATENTSCHRIFT

(11) **EP 0 675 270 B1**
(45) Veröffentlichungstag und Bekanntmachung des Hinweises auf die Patenterteilung: **22.10.1997**
(21) Anmeldenummer: 95890059.9
(22) Anmeldetag: 20.03.1995
(51) Int. Cl.: F02B 17/00, F02B 31/06

(54) **Verfahren zur Einbringung von Kraftstoff in den Brennraum einer Brennkraftmaschine**
Process for introducing fuel into the combustion chamber of an internal combustion engine
Procédé d'introduction de carburant dans la chambre de combustion d'un moteur à combustion interne

(30) Priorität: 31.03.1994 AT 692/94
(43) Veröffentlichungstag der Anmeldung: 04.10.1995
(73) Patentinhaber: AVL List GmbH, 8020 Graz (AT)
(72) Erfinder: Fraidl, Günter Karl, Dipl.-Ing. Dr., A-8054 Pirka (AT); Piock, Walter, Dr., A-8151 Hitzendorf (AT); Hazeu, Hendrik Peter, Dipl.-Ing., A-9201 Krumpendorf (AT)
(74) Vertreter: Krause, Walter, Dr. Dipl.-Ing.

(56) Entgegenhaltungen:
- WO-A-89/01568

## Beschreibung

Die Erfindung betrifft ein Verfahren zur Einbringung von Kraftstoff in den Brennraum einer Brennkraftmaschine, wobei verdichtetes Gas während der Kompressionsphase eines Arbeitszykluses aus dem Brennraum entnommen, in einer Mischkammer mit Kraftstoff gemischt und im darauffolgenden Arbeitszyklus zusammen mit dem Kraftstoff in den Brennraum eingeblasen wird.

Zunehmende Anforderungen an den Kraftstoffverbrauch und die Abgasemissionen, insbesondere der Kohlenwasserstoffe, erfordern den Einsatz neuer Technologien im Bereich der Verbrennungskraftmaschinen. Durch den heute üblichen Einsatz einer externen Gemischbildung bei Otto-Motoren, wie z.B. durch die Verwendung einer Saugrohreinspritzung oder eines Vergasers, strömt ein Teil des in den Brennraum und Zylinders eingesaugten Gemisches während der Ventilüberschneidungsphase, wenn Auslaß- und Einlaßventil gleichzeitig offen sind, in den Auspufftrakt der Brennkraftmaschine. Ein nicht unerheblicher Teil der meßbaren unverbrannten Kohlenwasserstoffe im Auspufftrakt stammt auch von Gemischteilen, die sich während der Verbrennung in Ringspalten oder wandnahen Bereichen, wo keine Verbrennung stattfindet, aufhalten. Diese genannten Punkte werden noch durch die notwendige Homogenisierung der Zylinderladung verstärkt, da damit der Kraftstoffverbrauch ohne die Anwendung einer Ladungsschichtung, die eine örtlich begrenzte Gemischverteilung im Brennraum und Zylinder darstellt, nicht weiter abgesenkt werden kann.

Um diese Nachteile zu verhindern bzw. zu vermindern, werden schon seit langem Versuche unternommen, den Kraftstoff erst innerhalb des Brennraumes und Zylinders oder einer unmittelbar angeschlossenen Mischkammer einzubringen. Dabei sind grundsätzlich drei Gemischbildungssysteme zu unterscheiden: Flüssigkeitshochdruckeinspritzung, luftunterstützende Einbringung und Gemischeinblasung.

Aus "The Ford Proco Engine Update", Scussel A. et al., SAE 780699 ist ein Verfahren bekannt, bei dem der Kraftstoff mittels einer Hochdruckeinspritzdüse direkt in den Brennraum der Verbrennungskraftmaschine eingespritzt wird. Die notwendige Zeit für die Aufbereitung des Gemisches begrenzt den Einspritzzeitpunkt. Es ist ein hohes Druckniveau für den Einspritzvorgang notwendig, um einerseits kurze Einspritzzeiten und andererseits ein entsprechend kleines Tropfenspektrum zu erhalten. Die Aufbereitung und Dosierung des Kraftstoffes findet gleichzeitig statt. Um nun nur ein örtlich begrenztes Gebiet mit brennbarem KraftstoffLuftgemisch zu erhalten, ist es notwendig, erst sehr spät den Kraftstoff einzubringen, um ein örtlich begrenztes brennbares Gemisch zu erhalten, was aber Probleme bei der Gemischbildung mit sich bringt.

Aus der WO 88/08082 ist die Anwendung einer luftunterstützenden Einbringung des Kraftstoffes in den Brennraum und Zylinder einer Brennkraftmaschine bekannt. Dabei wird diese Druckluft extern, das heißt außerhalb des Brennraumes, erzeugt und während der Kompressionsphase der Brennkraftmaschine dazu benutzt, den Kraftstoff einzubringen. Der Gasdruck der externen Druckluftversorgung begrenzt den Einbringungszeitpunkt, da während der Einbringung ein Druckgefälle zwischen Brennraum und Einbringungsvorrichtung herrschen muß. Die Dosierung des Kraftstoffes findet entkoppelt zur luftunterstützenden Aufbereitung statt. Durch die Verwendung verschiedener Gasdrücke der externen Druckluftversorgung ist eine Variation der Strahlgeometrie möglich.

Ein Verfahren der eingangs genannten Art ist beispielsweise aus der WO 89/01568 bekannt. Dabei erfolgt eine zeitlich steuerbare Entnahme einer kleinen Menge heißen verdichteten Gases über ein in den Brennraum des Zylinder öffnendes Einblaseventil. Das entnommene Gas wird in einem Ventilraum des Ventil zwischengespeichert und nach Einspritzen von Kraftstoff in das im Ventilraum befindliche heiße Gas als Kraftstoff-Gasgemisch wieder in den Brennraum eingeblasen. Durch die Verwendung des Zylinderdruckes als Speicherdruck ist prinzipiell jeder Einblasezeitpunkt möglich. Die Aufbereitung ist getrennt von der Dosierung und findet zum Teil im Speicherraum durch Zerstäubung und Vorverdampfung vor der eigentlichen Einbringung in den Brennraum und Zylinder statt, was das Einblasen eines mehrphasigen Gemisches mit sich bringt.

Für den Vollastbetrieb ist eine Homogenisierung der Zylinderladung erforderlich, um im gesamten Brennraum und Zylinder ein annähernd gleiches Kraftstoff/Luftverhältnis zu erzielen, was durch entsprechend frühes Einblasen des Gemisches möglich ist, weil dadurch genügend Zeit für die Durchmischung der Zylinderluft mit dem eingeblasenen Gemisch zur Verfügung steht. Für den Betrieb in der Teillast, bei dem eine örtlich begrenzte Gemischwolke im Brennraum und Zylinder erwünscht ist, wird diese durch entsprechend spätes Einblasen vor dem oberen Totpunkt und durch schichtungsunterstützende Maßnahmen erreicht, die im weiteren beschrieben werden.

Bei gemischansaugenden Brennkraftmaschinen mit Tumbleströmung, wie sie in den Dokumenten DE-OS 15 26 294, DE-OS 42 33 640, EP-A2 0 390 589, EP-A1 0 558 081, EP-A1 0 537 745 und DE-OS 35 45 440 gezeigt sind, kann eine Ladungsschichtung wegen der relativ langen Zeitspanne zwischen dem Einbringen des Kraftstoff-Luftgemisches während der Ansaugphase und der eigentlichen Verbrennung am Ende des Kompressionshubes nicht aufrecht gehalten werden, es kommt bis zur eigentlichen Verbrennung zu einer starken Durchmischung der geschichteten Bereiche mit Luft. Dadurch sind mit dieser Art des Betriebes von Verbrennungskraftmaschinen Luftverhältnisse nur von etwa λ = 1,9 und darunter möglich. Auch durch Hochdruckeinspritzung direkt in den Brennraum, wie dies in der DE-OS 15 26 294 ersichtlich ist, läßt sich keine weitere Abmagerung erzielen, da wegen der fehlenden Gemischaufbereitung der eingespritzte Strahl an heißen Flächen verdampfen muß, um ein zündfähiges Gemisch zu erzeugen. Um eine möglichst vollständige Verdampfung zu erreichen, muß die Einspritzung möglichst frühzeitig erfolgen, was allerdings bei einer Tumbleströmung wieder den Nachteil hat einer hohen Durchmischung durch die aus der Tumbleströmung resultierenden drei Hauptströmungen im Verlauf des Kompressionshubes bis zur eigentlichen Verbrennung. Dadurch ist eine weitere Erhöhung des Luftverhältnisses auch in diesem Falle nicht möglich.

Im Gegensatz zur Einblasung einer Kraftstoff-Gaswolke in den Brennraum wird bei den meisten flüssigkeitshochdruckeinspritzenden Verfahren durch die Ladungsbewegung eine Aufbereitung des flüssig eingebrachten Kraftstoffes erreicht. Dabei wird zur Erzielung eines brennbaren Gemisches der eingespritzte Kraftstoffstrahl durch die gezielt erzeugten Luftbewegungen aufgeteilt und weiter zerstäubt, um ein Gebiet brennbaren Gemisches zu erhalten.

Eine derartige Gemischaufbereitung kann bei Einblaseverfahren der eingangs genannten Art nicht verwendet werden, da durch eine Zerteilung der Gemischwolke die erwünschte Ladungsschichtung für die Teillast und dadurch der Verbrennungsablauf bei sehr magerem Motorbetrieb höchst ungünstig beeinflußt werden würde.

Einerseits ist es daher notwendig, die eingeblasene Wolke zündbaren Gemisches in einer räumlich zusammenhängenden Form zum Zündort zu bringen, andererseits soll der Gasaustausch zwischen Brennraum und Mischkammer des Einblaseventils während der Öffnungsphase des Einblaseventiles möglichst vollkommen erfolgen.

Aufgabe der vorliegenden Erfindung ist es, die in den Brennraum eingeblasene Gemischwolke in einer räumlich zusammenhängenden, kompakten Form zum Zündort zu bewegen und andererseits die Spülung der Mischkammer mit Zylinderladung zu erreichen.

Erfindungsgemäß wird dies dadurch erreicht, daß während der Kompressionsphase der Brennkraftmaschine eine komplexe Luftströmung mit einer ersten, zweiten und dritten Hauptströmung gezielt erzeugt wird, welche Hauptströmungen um zur Zylinderachse normalstehende Drehachsen rotieren und im Bereich der Brennraumdeckfläche etwa zum Zentrum der Verbrennung gerichtet sind, wobei die Drehachse der ersten Hauptströmung etwa normal auf die Drehachsen der zweiten und dritten Hauptströmung ausgebildet ist, und wobei die zweite und dritte Hauptströmung ein entgegengesetzt rotierendes Wirbelpaar erzeugen und die erste Hauptströmung im Bereich der Brennraumdeckfläche vom Einblaseort zum Zündort gerichtet ist, und in die erste Hauptströmung in Richtung Zündort das Kraftstoff-Luftgemisch eingeblasen wird, wobei die eingeblasene Gemischwolke durch das Wirbelpaar seitlich begrenzt und gleichzeitig die Mischkammer mit komprimierter Zylinderladung gespült wird. Die dabei entstehenden stabilen Luftströmungen halten die Gemischwolke einerseits durch die seitlichen Wirbel zusammen, andererseits bewirkt die erste Luftströmung eine Bewegung des Gemisches zu dem in der Nähe des Einblaseortes angeordneten Zündort. Die Luftströmung zur Erhaltung der Gemischschichtung wirkt dabei derart, daß Kraftstoffdampf und kleine Tröpfchen, die von der Strömung beeinflußt werden und überwiegend am Beginn der Einblasung in den Brennraum gelangen, in einem örtlich begrenzten und zusammenhängenden Gebiet bleiben. Die nachfolgenden größeren Tropfen, die bei größerem Ventilhub und dem kleineren Druckgefälle zwischen Mischraum und Brennraum eingeblasen werden, behalten ihre Strömungsrichtung bei der Einblasung im wesentlichen bei und werden durch die Luftströmung praktisch wenig beeinflußt. Das eingeblasene Kraftstoff-Luftgemisch, wird durch die erste Luftströmung praktisch von der Einblasemündung zum Zündort weggeblasen, was sich auch günstig für das Aufladen und Spülen der Mischkammer des Einblaseventiles auswirkt.

Eine derartige Strömung wird dadurch erreicht, daß zumindest ein Einlaßkanal tumbleerzeugend ausgeführt ist, wobei die auf der Einlaßzylinderhälfne angeordnete(n) Einlaßöffnung(en) des Einlaßkanals (der Einlaßkanäle) vorzugsweise symmetrisch zu einer durch die Zylinderachse gehenden Einlaßsymmetrieebene angeordnet ist (sind), und daß sowohl der, vorzugsweise auf der Einlaßseite, angeordnete Einblaseort, als auch der vorzugsweise auf der Auslaßseite angeordnete Zündort im Bereich der Einlaßsymmetrieebene liegen, wobei die eingeblasene Kraftstoff-Luftgemischwolke durch die erzeugte Strömung begrenzt und zum Zündort befördert wird, worauf die Mischkammer mit komprimierter Zylinderladung gespült wird.

Einlaßkanäle derart auszubilden, daß eine Tumbleströmung, d. h. eine sich im Brennraum normal zur Zylinderachse drehende Luftströmung, entsteht, ist bekannt. In der US-PS 5 138 989 wird beispielsweise in Fig. 4 ein Einlaßkanal gezeigt, der einen starken Tumblewirbel erzeugt. Charakteristisch dabei ist die flach liegende Einströmung, die in Richtung Auslaß gerichtet ist, und die stark einseitige Umströmung des Ventiltellers. Berechnungs- und Versuchsergebnisse zeigen, daß die Tumbleströmung sich während des Kompressionstaktes durch zwei Einzelwirbel beschreiben läßt, die in weiterer Folge durch die Kolbenbewegung und Reflexion an der Zylinder-, Brennraum- und Kolbenoberfläche vor dem oberen Totpunkt eine komplexe Luftströmung mit drei geirichteten Hauptströmungen ausbildet. Die dominierende Strömung verläuft entlang des zylinderkopfseitigen Brennraumes von der Einlsaßseite Richtung Auslaßseite. Die beiden anderen stehen nahezu senkrecht auf die dominierende Strömung und bilden ein gegenläufiges Wirbelpaar, das eine Strömung zur Zylindermitte hin verursacht. Die Ausbildung dieser Strömungsform hängt unmittelbar von der Einlaßkanalgestaltung und der Einmündung des oder der Einlaßkanäle in den Brennraum und Zylinder der Brennkraftmaschine ab.

Eine weitere erfindungsgemäße Lösung der Aufgabe sieht vor, daß eine Drallströmung im Brennraum während der Frischgaseinströmphase gezielt erzeugt wird, und daß das Kraftstoff-Luftgemisch unter einem derartigen Winkel zu einer durch Einblaseort und Zündort gebildeten, vorzugsweise in einer Normalebene auf die Zylinderachse liegenden, Geraden in die Drallströmung eingeblasen wird, daß eine auf die Normalebene projizierte Resultierende der auf Gemischteilchen einwirkenden Kräfte aus der Drallströmung und der Einblaseströmung etwa auf den nahe der Drallachse liegenden Bereich des Zündortes gerichtet ist, welcher der Drallachse näher liegt als der Einblaseort, wobei die eingeblasene Kraftstoff-Luftgemischwolke durch die Drallströmung begrenzt wird und gleichzeitig die Mischkammer mit komprimierter Zylinderladung gespült wird. Dies wird dadurch möglich, daß zumindest ein Einlaßkanal eine Drallströmung um eine zur Zylinderachse parallele Drallachse erzeugt, und daß der Zündort der Drallachse näher liegt als der Einblaseort, wobei bezüglich der Luftströmung der Zündort und der Einblaseort derart angeordnet ist, daß eine in die Normalebene auf die Zylinderachse projizierte Resultierende der auf die Gemischteilchen einwirkenden Kräfte der Drallströmung und der Einblaseströmung etwa auf den Bereich des Zündortes gerichtet ist, wobei die eingeblasene Kraftstoff-Luftgemischwolke durch die erzeugte Strömung begrenzt und zum Zündort befördert wird, worauf die Mischkammer mit komprimierter Zylinderladung gespült wird.

Unter einer Drallströmung versteht man die Rotationsströmung im Zylinder, die in an sich bekannter Weise um eine im wesentlichen zur Zylinderachse parallelen Achse erfolgt, die ebenfalls durch die Einlaßkanalgestaltung und der Einmündung des oder der Einlaßkanäle in den Brennraum und Zylinder der Brennkraftmaschine verursacht wird. Während der Kompression erfolgt nur eine geringfügige Veränderung des Strömungsbildes, da der Durchmesser des Wirbels durch die Kolbenbewegung nicht verändert wird. Vor dem oberen Totpunkt ist somit eine stabile Rotationsbewegung der angesaugten Luft im Brennraum und Zylinder gegeben.

Die Einlaßströmung in den Brennraum als Drallströmung um eine Parallele zur Zylinderachse auszubilden, ist bekannt. Eine Möglichkeit, einen Drall um die Zylinderachse zu erreichen ist, die Einlaßkanäle als Drallkanäle auszubilden. Bei Direkteinspritzverfahren erfolgt die Einspritzung in Drallrichtung, was eine Vergrößerung (Dehnung) des Gemischstrahles in Drehrichtung bewirkt. Eine Einspritzung entgegen der Drallrichtung bewirkt hingegen eine resultierende Gemischbewegung zum Drehzentrum, wie dies beispielsweise aus "A Study of the Swirl Stratified Combustion Principle", WITZKY J. et al., SAE 660092 bekannt ist. Bei der dort gezeigten direkten Kraftstoffeinspritzung ergibt sich allerdings der Nachteil einer ungenügenden Gemischaufbereitung im Bereich des Zündortes.

Beim erfindungsgemäßen Verfahren bewirkt die Drallströmung ein Zusammenhalten der Gemischwolke, während die Resultierende der auf die Gemischwolke einwirkenden Kräfte aus der Einblaseströmung und der Drallströmung in Richtung etwa auf den Bereich des Zündortes zeigt.

In einer weiteren Ausführungsvariante der Erfindung ist vorgesehen, daß im Brennraum eine Luftströmung gezielt erzeugt wird, welche Rotationskomponenten sowohl um eine zur Zylinderachse parallele Achse, als auch um normal auf die Zylinderstehende Achsen aufweist, wobei die Hauptströmungsrichtung im Bereich der Brennraumdecke etwa zum Verbrennungszentrum gerichtet ist, und wobei vorzugsweise der Zündort der parallelen Drehachse näher liegt als der Einblaseort, und daß das Kraftstoff-Luftgemisch unter einem derartigen Winkel zu einer durch Einblaseort und Zündort gebildeten, vorzugsweise in einer Normalebene auf die Zylinderachse liegenden, Geraden in die Luftströmung eingeblasen wird, wobei eine auf die Normalebene projizierte Resultierende der auf die Gemischteilchen einwirkenden Kräfte aus der tangentialen Luftströmung und der Einblaseströmung etwa auf den Bereich des Zündortes gerichtet ist, und daß die eingeblasene Gemischwolke durch die Luftströmung begrenzt wird und die Mischkammer gleichzeitig mit komprimierter Zylinderladung gespült wird.

Eine derartige Strömung wird dadurch erreicht, daß Kolbenboden und/oder Zylinderkopfdecke eine Mulde aufweisen und während des Verdichtungshubes des Kolbens eine zum Muldenzentrum gerichtete Quetschströmung erzeugen, welche der um eine zur Zylinderachse parallele Achse rotierenden Luftströmung überlagert ist.

Diese Strömung kann aber auch beispielsweise durch eine Tumbleströmung mit durch Kanalabschaltung generiertem, überlagerten Drall erzeugt werden. Dabei bildet sich eine ausgeprägte, unsymmetrische Strömung aus, die aus einer dominierenden Drallströmung, einer Strömung entlang des zylinderkopfseitigen Brennraumes vom Einlaß in Richtung Auslaß und einer auf diese senkrecht stehenden unsymmetrischen Wirbelströmung besteht. Bei dieser Strömung wird durch die Einströmung des Frischgases in den Brennraum und Zylinder der Brennkraftmaschine eine Drallbewegung, etwa durch unsymmetrische Einströmung oder durch die Formgebung des oder der Einlaßkanäle, und zusätzliche Drehbewegungen des Frischgases um im wesentlichen zur Zylinderachse normale Achsen generiert. Während der Kompressionsphase bilden sich wieder dominierende charakteristische Strömungen aus, die wieder in eine dominierende Komponente um eine zur Zylinderachse parallele Achse und Komponenten um zur Zylinderachse senkrecht stehende Achsen eingeteilt werden können. Vor dem oberen Totpunkt zeigt sich eine ausgeprägte Drallkomponente, eine Strömungskomponente, die entlang des zylinderkopfseitigen Brennraumes von der Einlaßseite Richtung Auslaßseite verläuft und eine Komponente, die im wesentlichen normal auf diese steht und in Richtung Zylindermitte zeigt.

Eine sichere Entzündung der Gemischwolke wird besonders dann erreicht, wenn der Abstand zwischen Einblaseort und Zündort, bezogen auf den Zylinderdurchmesser, etwa zwischen 0,05 und 0,4 beträgt.

Die Erfindung wird anhand der schematischen Figuren näher erläutert. Es zeigen:
- Fig. 1a: eine Tumbleströmung im Anfangsstadium,
- Fig. 1b: eine Tumbleströmung in einer Zwischenphase,
- Fig. 1c: eine Tumbleströmung vor dem oberen Totpunkt,
- Fig. 2a und 2b: eine Drallströmung bei unterschiedlichen Kolbenpositionen,
- Fig. 2c und 2d: eine Kombination aus Drall- und Tumbleströmung bei unterschiedlichen Kolbenpositionen,
- Fig. 3a: eine erste Variante der Erfindung in einer Draufsicht auf den Brennraum,
- Fig. 3b: einen Schnitt nach der Linie IIIb-IIIb in Fig. 3a,
- Fig. 3c: einen Schnitt nach der Linie IIIc-IIIc in Fig. 3a,
- Fig. 4a: eine zweite Variante der Erfindung in einer Draufsicht auf den Brennraum,
- Fig. 4b: einen Schnitt nach der Linie IVb-IVb in Fig. 4a,
- Fig. 4c: einen Schnitt nach der Linie IVc-IVc in Fig. 4a,
- Fig. 4d: ein Kräftediagramm für die in einer Normalebene auf die Zylinderachse wirkenden Kräfte auf einen Kraftstofftropfen,
- Fig. 5a: eine dritte Variante der Erfindung in einer Draufsicht auf den Brennraum,
- Fig. 5b: einen Schnitt nach der Linie Vb-Vb in Fig. 5a,
- Fig. 5c: einen Schnitt nach der Linie Vc-Vc in Fig. 5a,
- Fig. 6a: eine vierte Variante der Erfindung in einer Draufsicht auf den Brennraum,
- Fig. 6b: einen Schnitt nach der Linie VIb-VIb in Fig. 6a,
- Fig. 6c: einen Schnitt nach der Linie VIc-VIc in Fig. 6a.

Funktionsgleiche Elemente tragen gleiche Bezugszeichen.

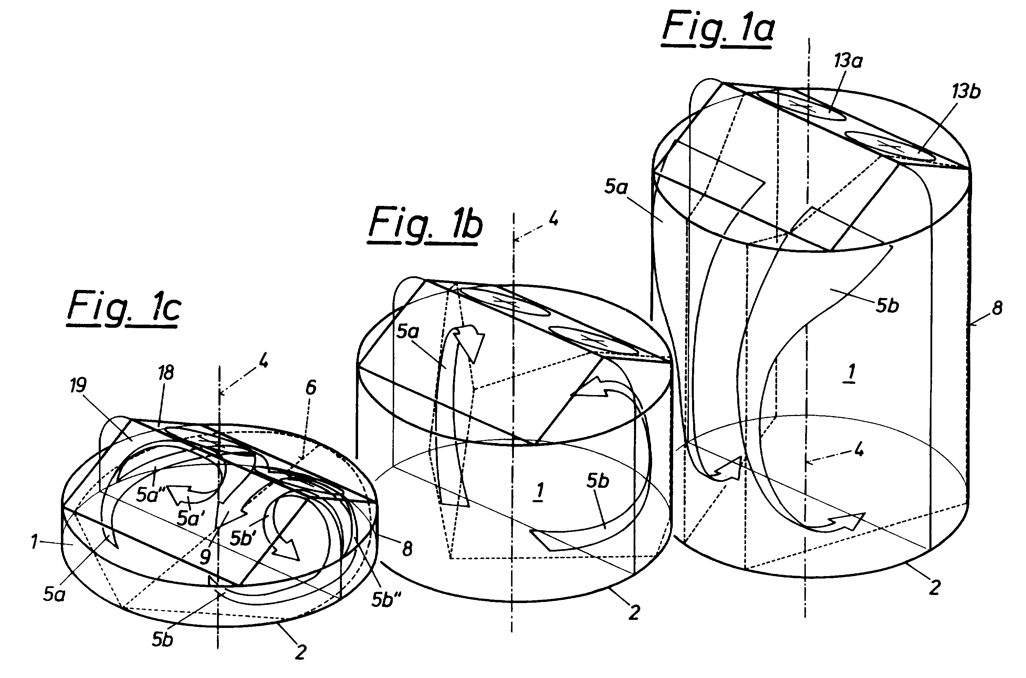

Fig. 1a bis 1c zeigen verschiedene Stadien einer Tumbleströmung. In den Brennraum 1 einer fremdgezündeten Brennkraftmaschine strömt in Richtung des Kolbens 2 über zwei Einlaßöffnungen 13a und 13b schräg zur Zylinderachse 4 Luft 5a und 5b ein. Während des in den Fig. 1b und 1c dargestellten Verdichtungshubes des Kolbens 2 nehmen die in Fig. 1a noch im gleichen Drehsinn um eine normal zur Zylinderachse 4 stehende Drehachse rotierenden dominierenden Luftströmungen 5a und 5b allmählich die in Fig. 1c gezeigte Lage ein, wobei sich die Luftströmungen 5a und 5b jeweils in zwei Luftströmungen 5a' und 5a" bzw. 5b' und 5b" aufspalten. 5a' und 5b' sind, wie in Fig. 1c ersichtlich, zwei entgegengesetzt rotierende Wirbelwalzen, deren Drehachsen etwa parallel zu der zwischen den Wirbelwalzen 5a' und 5b' liegenden Symmetrieebene 6 liegen. Beidseits und nahe der Symmetrieebene 6 sind die Luftströmungen 5a' und 5b' von der Brennraumdeckfläche 7 weg in Richtung Kolben 2 gerichtet. Die zweiten Teilströmungen 5a" und 5b" der Luftströmungen 5a und 5b werden durch die Zylinderwand 8 und die Brennraumdeckfläche 7 zur Symmetrieebene 6 geleitet, wo sie sich zu einer entlang der Symmetrieebene 6 strömenden Hauptströmung 9 etwa normal auf die Zylinderachse 4 vereinigen. Versuche und Berechnungen haben ergeben, daß in der Kompressionsendphase bei jeder Tumbleströmung gemäß Fig. 1a sich die beiden Wirbelwalzen 5a' und 5b', sowie die Hauptströmung 9 ausbilden. Mit 13a und 13b sind die auf der Einlaßzylinderseite 18 angeordneten Einlaßöffnungen bezeichnet. Bezugszeichen 19 deutet die der Einlaßzylinderseite 18 gegenüberliegende Auslaßzylinderseite an.

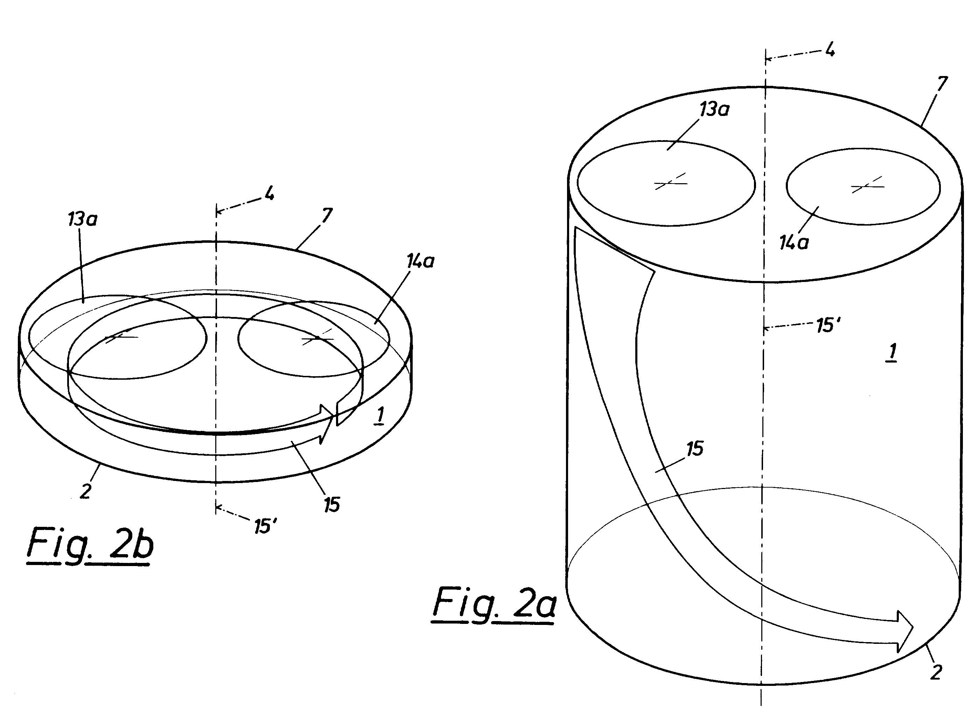

In Fig. 2a und 2b ist eine übliche Drallströmung gezeigt. Die Hauptströmungsrichtung 15 um eine parallele Drehachse 15' zur Zylinderachse 4 bleibt bei dieser Strömung im wesentlichen während der Kompressionsphase unverändert, solange keine andere Strömungsform, wie beispielsweise eine Quetschströmung oder eine Tumbleströmung, überlagert wird.

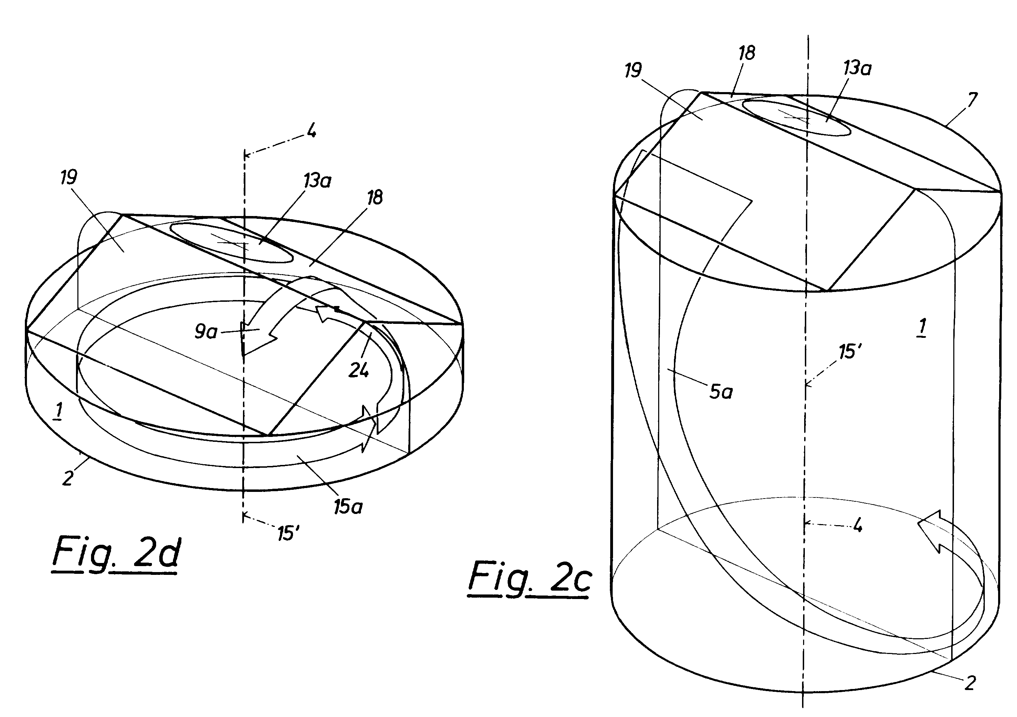

Eine derartige Überlagerung von Tumble- und Drallströmung ist in den Fig. 2c und 2d gezeigt. Dies wird dadurch erreicht, daß die Einlaßöffnung 13a eines tumbleerzeugenden Einlaßkanals asymmetrisch angeordnet, oder daß beispielsweise bei zwei tumbleerzeugenden Einlaßkanälen 13a und 13b ein Kanal abgeschaltet ist. Ähnlich einer Kombination der Fig. 1c mit 2b entsteht aus einer Einlaßströmung 5a während des Kolbenhubes eine Drallströmung 15a um die Zylinderachse 4 und eine Hauptströmung 9a mit einer dazu normalen Drehachse, wie dies in Fig. 2d gezeigt ist. Durch die unsymetrisch einströmende Luftströmung 5a bildet sich an Stelle von zwei Wirbeln eine Querströmung 24 aus.

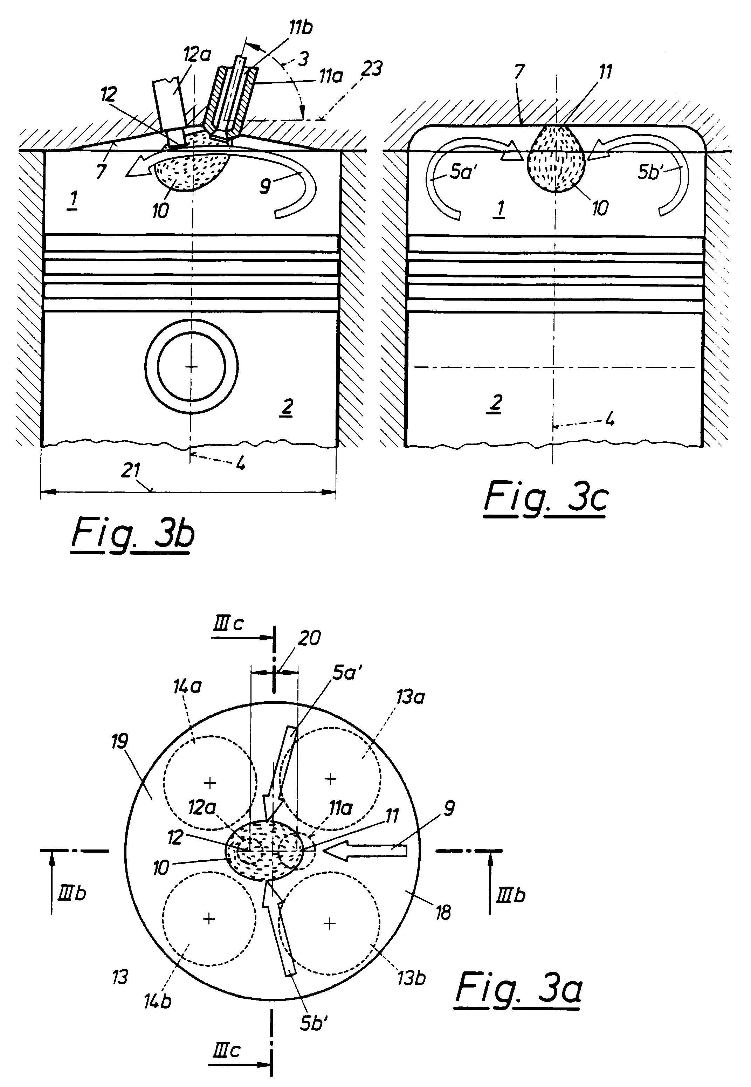

In den Fig. 3a bis 3c ist im Grund-, Auf- und Kreuzriß gezeigt, wie die Strömungen 5a' und 5b' und die Hauptströmung 9 erfindungsgemäß dazu verwendet werden, um eine in den Brennraum 1 eingeblasene Gemischwolke 10 zusammenzuhalten und gleichzeitig vom Einblaseort 11 zum Zündort 12 zu bewegen. Mit 11a ist ein Einblaseventil bezeichnet, welches einen Misch- und Speicherraum 11b beinhaltet, in welchen das aus dem Brennraum 1 entnommene Gas mit Kraftstoff vermischt wird. 12a deutet schematisch eine Zündeinrichtung an, welche geeignet ist, eine Verbrennung einzuleiten, und etwa eine Zündkerze oder auch eine Glühvorrichtung sein kann. 13a und 13b zeigen schematisch die Lage der Einlaßöffnungen an, 14a und 14b die Lage der Auslaßöffnungen. Wesentlich ist bei dieser Ausführungsform, daß Einblaseort 11 und Zündort 12 im Bereich einer durch die Zylinderachse 4 gehenden Einlaßsymmetrieebene 6 liegen, wobei die Strömungswalzen 5a' und 5b' symmetrisch zu dieser Symmetrieebene 6 ausgebildet sind und die Hauptströmung 9 parallel zu dieser Symmetrieebene 6 vom Einblaseort 11 zum Zündort 12 gerichtet ist. Vorteilhafterweise wird das Gemisch 10 in Richtung der Hauptströmung 9 eingeblasen, sodaß das Einblaseventil 11a vorzugsweise in einem Winkel 3 größer oder gleich etwa 45° zu einer durch Einblaseort 11 gelegten Normalebene 23 auf die Zylinderachse 4 angeordnet ist.

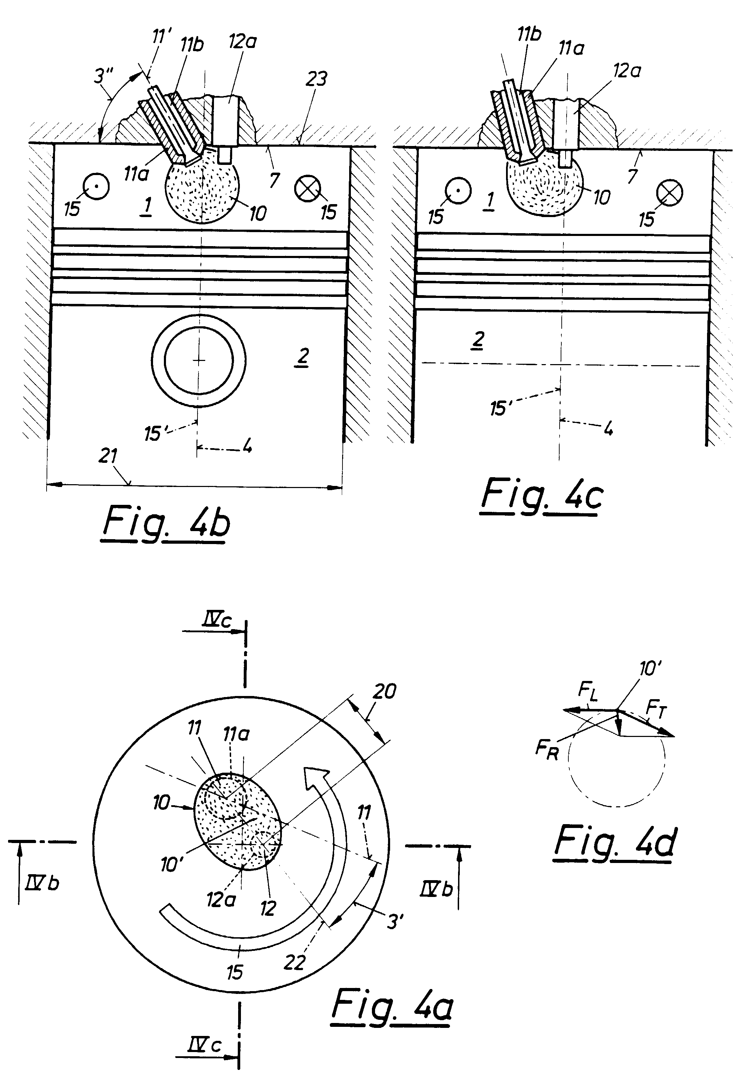

In den Fig. 4a, 4b und 4c ist eine weitere Ausführungsvariante der Erfindung im Grund-, Auf- und Kreuzriß dargestellt. Hier wird, wie an sich bekannt, eine Drallströmung 15, welche um eine Drallachse 15' parallel zur Zylinderachse 4 rotiert, während der Einlaßphase durch bekannte Mittel, wie beispielsweise durch Drallkanäle, generiert. Der Drall um die zur Zylinderachse 4 parallele Drallachse 15' bleibt während der Kompressionsphase des Kolbens 2 erhalten. Die Drallströmung 15 besitzt niedere Strömungsgeschwindigkeiten in der Nähe der Zylinderachse 4. Die Anordnung des Einblaseortes 11 und des Zündortes 12 wird so gewählt, daß der Zündort 12 näher bei der Drallachse 15' liegt als der Einblaseort 11. Die günstigste Lage des Zündortes 12 bezüglich des Einblaseortes 11 sowie der beste Einblasewinkel 3', 3'' zu einer durch Einblaseort 11 und Zündort 12 gebildeten Geraden 22, welche vorzugsweise in einer Normalebene 23 auf die Zylinderachse 4 liegt, ergibt sich aus dem Kräftediagramm in Fig. 4d. Die in einer Normalebene auf die Zylinderachse 4 projizierte Resultierende F_{R} der Einblaseströmungskraft F_{T} und der Kraft F_{L} der Drallströmung 15 muß demnach etwa auf den Bereich des Zündortes 12 gerichtet sein. Versuche zeigen, daß eine gute Entzündung des Gemisches erreicht wird, wenn der Abstand 20 zwischen Einblaseort 11 und Zündort 12 etwa zwischen 0,05 bis 0,4 mal dem Zylinderdurchmesser 21 beträgt. Vorteilhafterweise ist der durch 3' und 3'' in Fig. 4a und 4b verzerrt dargestellte Winkel zwischen der Einblaseachse 11' und der Geraden 22 größer oder gleich 45°. Auch hier bewirkt die rotierende Luftströmung 15, daß die Gemischwolke 10 einerseits zusammengehalten, andererseits vom Einblaseort 11 zum Zündort 12 bewegt wird. Außerdem wird die Mischkammer 11b des Einblaseventiles 11a gespült.

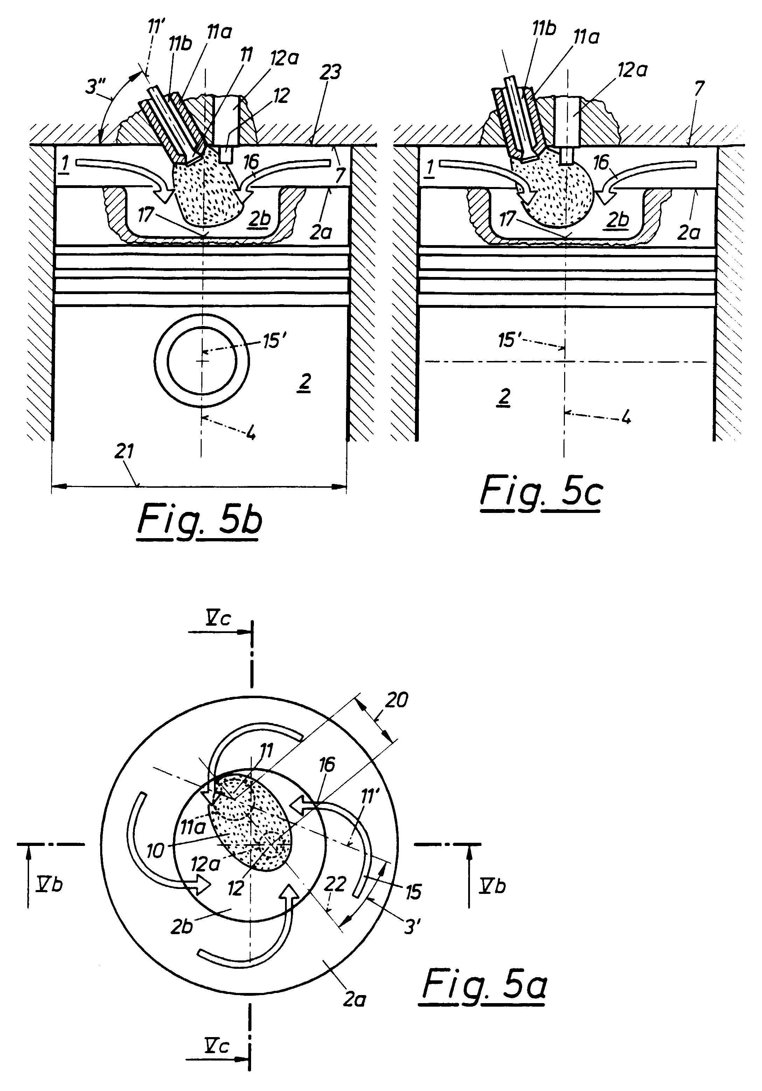

Die aus den Fig. 4a bis 4c ersichtliche Drallströmung 15 kann auch mit einer Quetschströmung 16, welche durch die Form der Kolbenoberfläche 2' und/oder der Gestaltung der Oberfläche 7' der Brennraumdeckfläche 7 erzeugt wird, kombiniert werden, wie dies aus den Fig. 5a bis 5c im Grund-, Auf- und Kreuzriß ersichtlich ist. Die Quetschfläche 2a des Kolbens 2 verleiht der Drallströmung 15 eine in Richtung des Muldenzentrums 17, das im Ausführungsbeispiel mit der Zylinderachse 4 zusammenfällt, von der Brennraumdeckfläche 7 weggerichtete Strömungskomponente 16, wodurch das durch das Einblaseventil 11a eingebrachte Gemisch 10 einerseits zusammengehalten und zum Zündort 12 gebracht wird, andererseits in die Brennraummulde 2b gedrückt wird. Bezüglich des Abstandes 20 und des Winkels 3', 3'' zwischen Einblaseachse 11' und der Geraden 22 gelten die gleichen Angaben wie im durch Fig. 4a bis 4c dargestellten Ausführungsbeispiel. Auch hier ist die gleichzeitige Spülung der Mischkammer 11b gewährleistet.

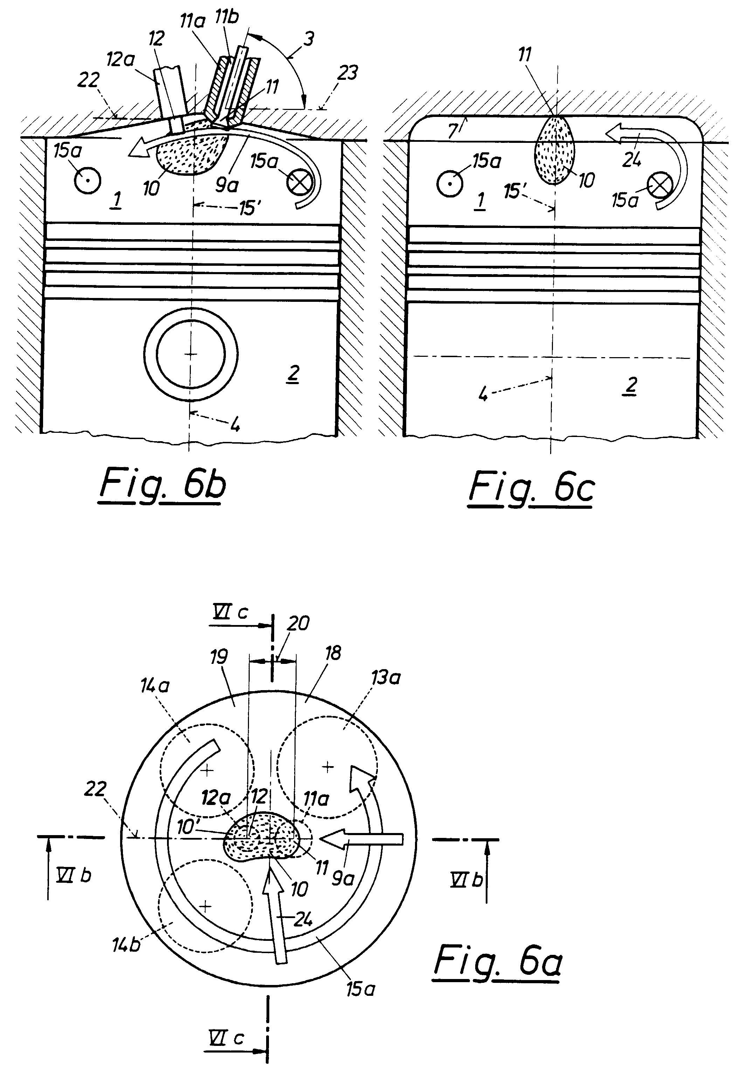

Fig. 6a bis 6c zeigen eine weitere Ausführungsvariante der Erfindung mit der an Hand der Fig. 2c und 2d erläuterten Kombination aus Tumble- und Drallströmung. Anstelle der in Fig. 1c oder Fig. 3a bis 3c ersichtlichen Wirbelströmungen 5a' und 5b' bildet sich hier eine schwache Querströmung 24 aus. Die Drallströmung 15a steuert die Gemischteilchen 10' der Gemischwolke 10 zueinander, während die Hauptströmung 9a die Gemischwolke vom Einblaseort 11 zum Zündort 12 bewegt.

## Patentansprüche

1. Verfahren zur Einbringung von Kraftstoff in den Brennraum einer Brennkraftmaschine, wobei verdichtetes Gas während der Kompressionsphase eines Arbeitszykluses aus dem Brennraum (1) entnommen, in einer Mischkammer (11b) eines Einblaseventiles (11a) mit Kraftstoff gemischt und im darauffolgenden Arbeitszyklus zusammen mit dem Kraftstoff in den Brennraum (1) eingeblasen wird, **dadurch gekennzeichnet,**
- daß während der Kompressionsphase der Brennkraftmaschine eine komplexe Luftströmung mit einer ersten (9), zweiten (5a') und dritten Hauptströmung (5b') gezielt erzeugt wird, welche Hauptströmungen (9,5a',5b') um zur Zylinderachse (4) normalstehende Drehachsen rotieren und im Bereich der Brennraumdeckfläche (7) etwa zum Zentrum der Verbrennung gerichtet sind, wobei die Drehachse der ersten Hauptströmung (9) etwa normal auf die Drehachsen der zweiten und dritten Hauptströmung ausgebildet ist, und wobei die zweite und dritte Hauptströmung ein entgegengesetzt rotierendes Wirbelpaar erzeugen, und die erste Hauptströmung (9) im Bereich der Brennraumdeckfläche (7) vom Einblaseort (11) zum Zündort (12) gerichtet ist, und
- in die erste Hauptströmung (9) in Richtung Zündort (12) das Kraftstoff-Luftgemisch eingeblasen wird, wobei die eingeblasene Gemischwolke (10) durch das Wirbelpaar seitlich begrenzt und gleichzeitig die Mischkammer (11b) mit komprimierter Zylinderladung gespült wird.

2. Verfahren zur Einbringung von Kraftstoff in den Brennraum einer Brennkraftmaschine, wobei verdichtetes Gas während der Kompressionsphase eines Arbeitszykluses aus dem Brennraum (1) entnommen, in einer Mischkammer (11b) eines Einblaseventiles (11a) mit Kraftstoff gemischt und im darauffolgenden Arbeitszyklus zusammen mit dem Kraftstoff in den Brennraum (1) eingeblasen wird, **dadurch gekennzeichnet,** daß
- eine Drallströmung (15) im Brennraum (1) während der Frischgaseinströmphase gezielt erzeugt wird, und
- das Kraftstoff-Luftgemisch unter einem derartigen Winkel (3', 3") zu einer durch Einblaseort (11) und Zündort (12) gebildeten, vozugsweise in einer Normalebene (23) auf die Zylinderachse (4) liegenden, Geraden (22) in die Drallströmung (15) eingeblasen wird, daß eine auf die Normalebene (23) projizierte Resultierende (F_{R}) der auf Gemischteilchen (10') einwirkenden Kräfte (F_{L}, F_{T}) aus der Drallströmung (15) und der Einblaseströmung etwa auf den nahe der Drallachse (15') liegenden Bereich des Zündortes (12) gerichtet ist, welcher der Drallachse (15') näher liegt als der Einblaseort (11), wobei die eingeblasene Kraftstoff-Luftgemischwolke (10) durch die Drallströmung (15) begrenzt wird und gleichzeitig die Mischkammer (11b) mit komprimierter Zylinderladung gespült wird.

3. Verfahren zur Einbringung von Kraftstoff in den Brennraum einer Brennkraftmaschine, wobei verdichtetes Gas während der Kompressionsphase eines Arbeitszykluses aus dem Brennraum (1) entnommen, in einer Mischkammer (11b) eines Einblaseventiles (11a) mit Kraftstoff gemischt und im darauffolgenden Arbeitszyklus zusammen mit dem Kraftstoff in den Brennraum (1) eingeblasen wird, **dadurch gekennzeichnet,** daß
- im Brennraum (1) eine Luftströmung (15,16;9a,15a) gezielt erzeugt wird, welche Rotationskomponenten sowohl um eine zur Zylinderachse (4) parallele Achse (15'), als auch um normal auf die Zylinderachse (4) stehende Achsen aufweist, wobei die Hauptströmungsrichtung (9a,16) im Bereich der Brennraumdecke (7) etwa zum Verbrennungszentrum gerichtet ist, und wobei vorzugsweise der Zündort (12) der parallelen Drehachse (15') näher liegt als der Einblaseort (11), und
- daß das Kraftstoff-Luftgemisch unter einem derartigen Winkel (3',3";3) zu einer durch Einblaseort (11) und Zündort (12) gebildeten, vorzugsweise in einer Normalebene (23) auf die Zylinderachse (4) liegenden, Geraden (22) in die Luftströmung (16;9a) eingeblasen wird, wobei eine auf die Normalebene (23) projizierte Resultierende (F_{R}) der auf Gemischteilchen (10') einwirkenden Kräfte (F_{L}, F_{T}) aus der tangentialen, um eine Parallele (15') zur Zylinderachse (4) rotierenden Luftströmung (15,15a) und der Einblaseströmung etwa auf den Bereich des Zündortes (11) gerichtet ist, wobei die eingeblasene Gemischwolke (10) durch die Luftströmung (15,16;9a,15a) begrenzt wird und die Mischkammer (11b) gleichzeitig mit komprimierter Zylinderladung gespült wird.

4. Fremdgezündete Brennkraftmaschine mit Ausrichtung der Einblasung in Bezug auf den Zündort, mit einem hin- und hergehenden Kolben (2), einer Zündeinrichtung (12a), und mit zumindest einem Ein- und Auslaßkanal pro Zylinder, sowie einem in den Brennraum (1) mündenden Einblaseventil (11a) zur Einbringung von Kraftstoff in den Brennraum, wobei verdichtetes Gas während der Kompressionsphase eines Arbeitszykluses aus dem Brennraum (1) entnommen, in einer Mischkammer (11b) eines Einblaseventiles (11a) mit Kraftstoff gemischt und im darauffolgenden Arbeitszyklus zusammen mit dem Kraftstoff in den Brennraum (1) eingeblasen wird, **dadurch gekennzeichnet,** daß zumindest ein Einlaßkanal tumbleerzeugend ausgeführt ist, wobei die auf der Einlaßzylinderhälfte (18) angeordnete(n) Einlaßöffnung(en) (13a, 13b) des Einlaßkanals (der Einlaßkanäle) vorzugsweise symmetrisch zu einer durch die Zylinderachse (4) gehenden Einlaßsymmetrieebene (6) angeordnet ist (sind), und daß sowohl der, vorzugsweise auf der Einlaßseite (18), angeordnete Einblaseort (11), als auch der vorzugsweise auf der Auslaßseite (19) angeordnete Zündort (12) im Bereich der Einlaßsymmetrieebene (6) liegen, wobei die eingeblasene Kraftstoff-Luftgemischwolke (10) durch die erzeugte Strömung (9, 5a',5b') begrenzt und zum Zündort (12) befördert wird, worauf die Mischkammer (11b) mit komprimierter Zylinderladung gespült wird.

5. Fremdgezündete Brennkraftmaschine mit Ausrichtung der Einblasung in Bezug auf den Zündort, mit einem hin- und hergehenden Kolben (2), einer Zündeinrichtung (12a), sowie mit zumindest einem Ein- und Auslaßkanal pro Zylinder, sowie in den Brennraum (1) mündenden Einblaseventil (11a) zur Einbringung von Kraftstoff in den Brennraum, wobei verdichtetes Gas während der Kompressionsphase eines Arbeitszykluses aus dem Brennraum (1) entnommen, in einer Mischkammer (11b) eines Einblaseventiles (11a) mit Kraftstoff gemischt und im darauffolgenden Arbeitszyklus zusammen mit dem Kraftstoff in den Brennraum (1) eingeblasen wird, **dadurch gekennzeichnet,** daß zumindest ein Einlaßkanal eine Drallströmung (15) um eine zur Zylinderachse (4) parallele Drallachse (15') erzeugt, und daß der Zündort (12) der Drallachse (15') näher liegt als der Einblaseort (11), wobei bezüglich der Luftströmung (15) der Zündort (12) und der Einblaseort (11) derart angeordnet ist, daß eine in die Normalebene (23) auf die Zylinderachse (4) projizierte Resultierende (F_{R}) der auf die Gemischteilchen (10') einwirkenden Kräfte (F_{L}, F_{T}) der Drallströmung (15) und der Einblaseströmung etwa auf den Bereich des Zündortes (12) gerichtet ist, wobei die eingeblasene Kraftstoff-Luftgemischwolke (10) durch die erzeugte Strömung (15) begrenzt und zum Zündort (12) befördert wird, worauf die Mischkammer (11b) mit komprimierter Zylinderladung gespült wird.

6. Brennkraftmaschine nach Anspruch 5, **dadurch gekennzeichnet,** daß Kolbenboden (2a) und/oder Zylinderkopfdecke (7) eine Mulde (2b) aufweisen und während des Verdichtungshubes des Kolbens (2) eine zum Muldenzentrum (17) gerichtete Quetschströmung (16) erzeugen, welche der um eine zur Zylinderachse (4) parallele Achse (15') rotierenden Drallströmung (15) überlagert ist.

7. Brennkraftmaschine nach einem der Ansprüche 4 bis 6, **dadurch gekennzeichnet,** daß für den Vollast- und Teillastbetrieb des Motors eine Veränderung der Zylinderinnenströmung durch unterschiedliche Einlaßströmung, wie beispielsweise Kanalabschaltung oder durch Kanalabdeckung herbeiführbar ist.

8. Brennkraftmaschine nach einem der Ansprüche 4 bis 7, **dadurch gekennzeichnet,** daß der Abstand (20) zwischen Einblaseort (11) und Zündort (12), bezogen auf den Zylinderdurchmesser (21), etwa zwischen 0,05 und 0,4 beträgt.

## Claims

1. Method for introducing fuel into the combustion chamber of an internal combustion engine, in which compressed gas is drawn from the combustion chamber (1) during the compression phase of a working cycle, and is mixed with fuel in a mixing chamber (11b) of an injection valve (11a), and is injected into the combustion chamber (1) together with the fuel during the subsequent working cycle, **characterized in that**
- a complex air flow is purposefully generated during the compression phase of the internal combustion engine, consisting of a first (9), second (5a'), and third main air stream (5b'), which main streams (9, 5a', 5b') rotate about rotational axes normal to the cylinder axis (4), and are directed approximately towards the centre of combustion in the area of the top (7) of the combustion chamber (1), the rotational axis of the first main stream (9) being approximately normal to the rotational axes of the second and third main streams, and the second and third main streams forming a vortex pair rotating in opposite directions, and the first main stream (9) being directed in the area of the top (7) of the combustion chamber (1) from the injection point (11) towards the ignition point (12), and further that
- the fuel-air mixture is injected into the first main stream (9) in the direction of the ignition point (12), the injected fuel-air spray (10) being laterally confined by the vortex pair and the mixing chamber (11b) being swept with compressed cylinder charge at the same time.

2. Method for introducing fuel into the combustion chamber of an internal combustion engine, in which compressed gas is drawn from the combustion chamber (1) during the compression phase of a working cycle, and is mixed with fuel in a mixing chamber (11b) of an injection valve (11a), and is injected into the combustion chamber (1) together with the fuel during the subsequent working cycle, **characterized in that**
- a swirl flow (15) is purposefully induced in the combustion chamber (1) during the admission of fresh air, and
- the fuel-air mixture is injected into the swirl flow (15) at an angle (3', 3") to a straight line (22) formed by injection point (11) and ignition point (12) and preferably situated in a plane (23) normal to the cylinder axis (4), such that a resultant (F_{R}) projected on the normal plane (23), of the forces (FL and F_{T}) stemming from swirl flow (15) and injection flow and acting on particles (10') of the fuel-air mixture, is directed approximately towards the ignition point (12) next to the rotational axis (15'), which is closer to the rotational axis (15') than the injection point (11), the injected fuel-air spray (10) being bounded by the swirl flow (15), and the mixing chamber (11b) being swept with compressed cylinder charge at the same time.

3. Method for introducing fuel into the combustion chamber of an internal combustion engine, in which compressed gas is drawn from the combustion chamber (1) during the compression phase of a working cycle, and is mixed with fuel in a mixing chamber (11b) of an injection valve (11a), and is injected into the combustion chamber (1) together with the fuel during the subsequent working cycle, **characterized in that**
- an air flow (15, 16; 9a, 15a) is purposefully created in the combustion chamber (1), with rotation components both about an axis (15') parallel to the cylinder axis (4) and about axes normal to the cylinder axis (4), the main flow direction (9a, 16) in the area of the top (7) of the combustion chamber (1) being directed approximately towards the center of combustion, and the ignition point (12) preferably being closer to the parallel rotational axis (15') than the injection point (11), and further that
- the fuel-air mixture is injected into the air flow (16; 9a) at an angle (3', 3"; 3) to a straight line (22) formed by injection point (11) and ignition point (12) and preferably being situated in a plane (23) normal to the cylinder axis (4), such that a resultant (F_{R}) projected on the normal plane (23), of the forces (F_{L} and F_{T}) acting on particles (10') of the fuel-air mixture and stemming from the tangential air flow (15, 15a) rotating about a parallel (15') to the cylinder axis (4), and the injection flow, is directed approximately towards the ignition point (12), the injected fuel-air spray (10) being bounded by the air flow (15, 16; 9a, 15a) and the mixing chamber (11b) being swept with compressed cylinder charge at the same time.

4. Spark-ignited internal combustion engine where mixture injection is directed towards the ignition point, with a reciprocating piston (2), an igniter (12a), and one or more inlet and outlet passages per cylinder, and with an injection valve (11a) opening into the combustion chamber (1) for the purpose of blowing fuel into the combustion chamber, where compressed gas is drawn from the combustion chamber (1) during the compression phase of a working cycle, and is mixed with fuel in a mixing chamber (11b) of an injection valve (11a), and is injected into the combustion chamber (1) together with the fuel during the subsequent working cycle, **characterized in that** at least one inlet passage is designed such that it permits the generation of a tumble flow, the inlet opening(s) (13a, 13b) of the inlet passage(s) located on the inlet side (18) of the cylinder preferably being arranged symmetrically to an inlet symmetry plane (6) through the cylinder axis (4), and that both the injection point (11), which is preferably located on the inlet side (18), and the ignition point (12), which is preferably located on the outlet side (19), are located in the area of the inlet symmetry plane (6), the injected fuel-air spray (10) being bounded by the generated flow (9, 5a', 5b') and carried towards the ignition point (12), whereupon the mixing chamber (11b) is swept with compressed cylinder charge.

5. Spark-ignited internal combustion engine where mixture injection is directed towards the ignition point, with a reciprocating piston (2), an igniter (12a), and one or more inlet and outlet passages per cylinder, and with an injection valve (11a) opening into the combustion chamber (1) for the purpose of blowing fuel into the combustion chamber, where compressed gas is drawn from the combustion chamber (1) during the compression phase of a working cycle, and is mixed with fuel in a mixing chamber (11b) of an injection valve (11a), and is injected into the combustion chamber (1) together with the fuel during the subsequent working cycle, **characterized in that** at least one inlet passage generates a swirl flow (15) about a rotational axis (15') parallel to the cylinder axis (4), and that the ignition point (12) is closer to the rotational axis (15') than the injection point (11), ignition point (12) and injection point (11) being situated relative to the air flow (15) such that a resultant (F_{R}) of the forces (FL, FT ) stemming from swirl flow (15) and injection flow and acting upon the fuel particles (10'), which is projected into the plane (23) normal to the cylinder axis (4), is directed approximately towards the area of the ignition point (12), the injected fuel-air spray (10) being bounded by the generated flow (15) and carried towards the ignition point (12), whereupon the mixing chamber (11b) is swept with compressed cylinder charge.

6. Internal combustion engine as in claim 5, **characterized in that** piston top (2a) and/or top (7) of the cylinder head are provided with a recess (2b) and produce a compression swirl (16) directed towards the recess centre (17) during the compression stroke of the piston (2), which swirl (16) is superimposed on the swirl flow (15) rotating about an axis (15') parallel to the cylinder axis (4).

7. Internal combustion engine as in any of claims 4 to 6, **characterized in that** for full load or part-load operation of the engine the flow inside the cylinder may be modified by varying the inlet flow, for instance by closing or masking an inlet passage.

8. Internal combustion engine as in any of claims 4 to 7, **characterized in that** the distance (20) between injection point (11) and ignition point (12) is approximately 0.05-0.4 times the cylinder diameter (21).

## Revendications

1. Procédé d'introduction de carburant dans la chambre de combustion d'un moteur à combustion interne, du gaz comprimé étant prélevé de la chambre de combustion (1) pendant la phase de compression d'un cycle de travail, mélangé à du carburant dans une chambre de mélange (11b) appartenant à une soupape d'insufflation (11a) et insufflé dans le cycle de travail subséquent, conjointement avec le carburant, dans la chambre de combustion (1), caractérisé en ce que
- pendant la phase de compression du moteur à combustion interne est généré à dessein un écoulement d'air complexe ayant un premier (9), un deuxième (5a') et un troisième (5b') écoulement principal, ces écoulements principaux (9, 5a', 5b') tournant autour d'axes de rotation orientés perpendiculairement par rapport à l'axe de cylindre (4) et orientés à peu près vers le centre de la combustion, dans la zone de la surface de plafond (7) de la chambre de combustion, l'axe de rotation du premier écoulement principal (9) étant à peu près perpendiculaire aux axes de rotation des deuxième et troisième écoulement principal, le deuxième et le troisième écoulement principal générant un couple de tourbillonnements tournant en sens inverse et le premier écoulement principal (9) étant orienté vers le site d'allumage (12) depuis le site d'insufflation (11), dans la zone de la surface de plafond (7) de la chambre de combustion, et
- le mélange air-carburant étant insufflé dans le premier écoulement principal (9), dans la direction du site d'allumage (12), le nuage de mélange (10) insufflé étant limité latéralement par le couple de tourbillonnements et balayant simultanément la chambre de mélange (11b) avec la charge de cylindre comprimée.

2. Procédé d'introduction de carburant dans la chambre de combustion d'un moteur à combustion interne, du gaz comprimé étant prélevé de la chambre de combustion (1) pendant la phase de compression d'un cycle de travail, mélangé à du carburant dans une chambre de mélange (11b) appartenant à une soupape d'insufflation (11a) et insufflé dans le cycle de travail subséquent, conjointement avec le carburant, dans la chambre de combustion (1), caractérisé en ce qu'
- un écoulement rotatoire (15) est généré à dessein dans la chambre de combustion (1) pendant la phase d'introduction de gaz frais, et
- le mélange air-carburant est insufflé dans l'écoulement rotatoire (15), sous un angle (3', 3") par rapport à une droite (22) constituée par le site d'insufflation (11) et par le site d'allumage (12), située de préférence dans un plan (23) perpendiculaire à l'axe de cylindre (4), angle de valeur telle qu'une résultante (F_{R}), projetée sur le plan normal (23) des forces (F_{L},F_{T}) agissant sur des particules de mélange (10') issues de l'écoulement rotatoire (15) et de l'écoulement d'insufflation, soit orientée à peu près sur la zone, proche de l'axe de rotation (15'), du site d'allumage (12), qui est située plus près de l'axe de rotation (15') que le site d'insufflation (11), le nuage air-carburant (10) insufflé étant limité par l'écoulement rotatoire (15) et la chambre de mélange (11b) étant simultanément balayée avec une charge de cylindre comprimée.

3. Procédé d'introduction de carburant dans la chambre de combustion d'un moteur à combustion interne, du gaz comprimé étant prélevé de la chambre de combustion (1) pendant la phase de compression d'un cycle de travail, mélangé à du carburant dans une chambre de mélange (11b) appartenant à une soupape d'insufflation (11a) et insufflé dans le cycle de travail subséquent, conjointement avec le carburant, dans la chambre de combustion (1), caractérisé en ce que
- dans la chambre de combustion (1) est généré à dessein un écoulement d'air (15, 16; 9a, 15a) qui présente des composantes de rotation, tant dans un axe (15') parallèle à l'axe de cylindre (4) qu'également autour d'axes perpendiculaires à l'axe de cylindre (4), la direction d'écoulement principal (9a, 16) dans la zone du plafond (7) de la chambre de combustion étant orientée à peu près vers le centre de la combustion et, de préférence, le site d'allumage (12) étant situé plus près de l'axe de rotation (15') parallèle que le site d'insufflation (11), et
- en ce que le mélange air-carburant est insufflé dans l'écoulement d'air (16; 9a), sous un angle (3', 3"; 3) par rapport à une droite (22) constituée par le site d'insufflation (11) et par le site d'allumage (12), située de préférence dans un plan (23) perpendiculaire à l'axe de cylindre (4), angle de valeur telle qu'une résultante (F_{R}), projetée sur le plan normal (23) des forces (F_{L},F_{T}) agissant sur des particules de mélange (10') issues de l'écoulement d'air (15, 15a) tangentiel, tournant autour d'une parallèle (15') à l'axe de cylindre (4), et de l'écoulement d'insufflation, soit orientée à peu près sur la zone du site d'allumage (11), le nuage air-carburant (10) insufflé étant limité par l'écoulement d'air (15, 16; 9a, 15a) et la chambre de mélange (11b) étant simultanément balayée avec une charge de cylindre comprimée.

4. Moteur à combustion interne à allumage commandé, l'insufflation étant orientée par rapport au site d'allumage, avec un piston (2) soumis à un mouvement alternatif, un dispositif d'allumage (12a) et avec au moins un canal d'admission et d'évacuation par cylindre, ainsi qu'une soupape d'insufflation (11a) débouchant dans la chambre de combustion (1), en vue d'introduire du carburant dans la chambre de combustion, du gaz comprimé étant prélevé de la chambre de combustion (1) pendant la phase de compression d'un cycle de travail, mélangé à du carburant dans une chambre de mélange (11b) d'une soupape d'insufflation (11a) et étant insufflé, dans le cycle de travail subséquent, dans la chambre de combustion (1), conjointement avec le carburant, caractérisé en ce qu'au moins un canal d'admission est réalisé de façon à générer un basculement, dans lequel la ou les ouvertures d'admission (13a, 13b), disposées sur la moitié (18) du cylindre d'admission, du canal d'admission (des canaux d'admission) étant disposée(s) de préférence symétriquement par rapport à un plan de symétrie d'admission (6) passant par l'axe de cylindre (4), et ce que tant le site d'insufflation (11) disposé de préférence du côté admission (18) qu'également le site d'allumage (12) disposé de préférence du côté échappement (19) sont situés dans la zone du plan de symétrie d'admission (6), le nuage de mélange air-carburant (10) insufflé étant limité par l'écoulement (9, 5a', 5b') généré et étant véhiculé vers le site d'allumage (12) suite à quoi la chambre de mélange (11b) est balayée avec la charge de cylindre comprimée.

5. Moteur à combustion interne à allumage commandé, l'insufflation étant orientée par rapport au site d'allumage, avec un piston (2) soumis à un mouvement alternatif, un dispositif d'allumage (12a) et avec au moins un canal d'admission et d'évacuation par cylindre, ainsi qu'une soupape d'insufflation (11a) débouchant dans la chambre de combustion (1), en vue d'introduire du carburant dans la chambre de combustion, du gaz comprimé étant prélevé de la chambre de combustion (1) pendant la phase de compression d'un cycle de travail, mélangé à du carburant dans une chambre de mélange (11b) d'une soupape d'insufflation (11a) et étant insufflé, dans le cycle de travail subséquent, dans la chambre de combustion (1), conjointement avec le carburant, caractérisé en ce qu'au moins un canal d'admission génère un écoulement rotatoire (15), autour d'un axe de rotation (15') parallèle à l'axe de cylindre (4), et en ce que le site d'allumage (12) est situé plus près de l'axe de rotation (15') que le site d'insufflation (11), dans lequel, concernant l'écoulement d'air (15), le site d'allumage (12) et le site d'insufflation (11) sont disposés de manière qu'une résultante (F_{R}), projetée dans le plan normal (23) par rapport à l'axe de cylindre (4), des forces (F_{L},F_{T}) agissant sur les particules de mélange (10'), de l'écoulement rotatoire (15) et de l'écoulement d'insufflation, est orientée à peu près sur la zone du site d'allumage (12), le nuage de mélange air-carburant (10) insufflé étant limité par l'écoulement (15) généré et étant véhiculé vers le site d'allumage (12), suite à quoi la chambre de mélange (11b) est balayée avec la charge de cylindre comprimée.

6. Moteur à combustion interne selon la revendication 5, caractérisé en ce que le fond de piston (2a) et/ou le plafond de culasse (7) présentent un creusement (2b) et génèrent, pendant la course de compression du piston (2), un écoulement d'écrasement (16) orienté vers le centre de creusement (17), écoulement qui est superposé à l'écoulement rotatoire (15) tournant autour d'un axe (15') parallèle à l'axe de cylindre (4).

7. Moteur à combustion interne selon l'une des revendications 4 à 6, caractérisé en ce que, pour le fonctionnement en pleine charge ou en charge partielle du moteur, une modification de l'écoulement intérieur au cylindre est susceptible d'être provoquée par une modification de l'écoulement d'admission, comme par exemple par une coupure du circuit de canal ou par un recouvrement de canal.

8. Moteur à combustion interne selon l'une des revendications 4 à 7, caractérisé en ce que le rapport entre la distance (20), existant entre le site d'insufflation (11) et le site d'allumage (12), et le diamètre de cylindre (21), est compris dans la plage située entre 0,05 et 0,4.
